# EUROPÄISCHE PATENTANMELDUNG

(11) **EP 0 754 720 A1**
(43) Veröffentlichungstag der Anmeldung: **22.01.1997**
(21) Anmeldenummer: 96108067.8
(22) Anmeldetag: 21.05.1996
(51) Int. Cl.: C08J 9/12, F16L 59/02

(54) **Isolierkörper**

(30) Priorität: 15.07.1995 DE 19525861
(71) Anmelder: HÜLS AKTIENGESELLSCHAFT, 45764 Marl (DE)
(72) Erfinder: Landwehr, Dierk, Dr., 48249 Dülmen (DE); Smigerski, Hans-Jürgen, Dr., 45770 Marl (DE)

(57) **Zusammenfassung**

Herkömmliche, handelsübliche Isolierkörper aus geschäumten Kunststoffen besitzen in der Regel Wärmeleitfähigkeiten von 0,03 W/(m·K) und mehr. Selbst mit schlecht wärmeleitenden Gasen getriebene Kunststoffe erreichen nur selten bessere Werte, da meist rasch ein Gasaustausch mit Luft erfolgt.

Der erfindungsgemäße Isolierkörper aus mit Schwergas geschäumtem Kunststoff besitzt dagegen eine versiegelte Oberfläche und erreicht so Wärmeleitfähigkeiten von weniger als 0,02 W/(m·K) bei 20 °C.

Wärmeisolierung von Apparaten, Behältern, Rohren und Gebäuden.

## Beschreibung

Die Erfindung betrifft einen Isolierkörper sowie seine bevorzugte Verwendung zur thermischen Isolierung von Apparaten, Rohrleitungen, Behältern und Gebäuden.

Die Erfindung bezweckt, ein einfach zu handhabendes Wärmeisolationsmittel mit verbesserter Wärmeisolationswirkung und verbesserten Gebrauchseigenschaften kostengünstig bereitzustellen.

Die Herstellung von Schaumstoff-Formkörpern mit geschlossener Oberfläche (Haut) mittels Extrusion ist aus z. B. US-3 461 496 bekannt.

Für den Wärme- (bzw. Kälte-)schutz ist unter anderem aus dem Hochbau, der Kältetechnik oder dem Apparate- und Anlagenbau eine Vielzahl von Isoliersystemen bekannt. Die charakteristische Größe zur Beschreibung der Isolationswirkung dieser Systeme ist die Wärmeleitfähigkeit λ. Je geringer die Wärmeleitfähigkeit eines Isoliersystems ist, desto geringer fällt die benötigte Schichtdicke zum Erzielen einer vorgegebenen Isolationswirkung aus. Der Wert der Wärmeleitfähigkeit ist daher auch aus wirtschaftlicher Sicht bedeutsam.

Als sehr wirkungsvolle Isoliersysteme mit zum Teil sehr geringen Wärmeleitfähigkeiten von weniger als 0,01 W/(m·K) sind vereinzelt aus dem alltäglichen Gebrauch evakuierte Systeme bekannt, beispielsweise von Warmhaltekannen. Die Realisierung evakuierter - und vor allem bleibend evakuierter - Systeme ist jedoch mit einem erhöhten Aufwand verbunden, der ihre Gebrauchs- und Einsatzmöglichkeiten stark einschränkt und höhere Kosten verursacht. Gleiches gilt auch für die als Superisolation bezeichneten Isoliersysteme oder das Vakuumisolationspaneel nach EP-0 463 311. Der Einsatz dieser Isoliersysteme bleibt daher in der Regel Spezialanwendungen vorbehalten.

Bei den herkömmlichen, handelsüblichen Isoliersystemen handelt es sich daher in aller Regel um feststoffhaltige, teils formbare, teils nichtformbare Systeme, die geschäumte, faser- oder pulverartige Substanzen enthalten. Die vom Feststoff umgebenen Gasräume führen zu einer verglichen mit dem Feststoff verringerten Wärmeleitfähigkeit; meist ist das umschlossene Gas Luft. Herkömmliche, handelsübliche Isoliersysteme verfügen im allgemeinen über Wärmeleitfähigkeiten von 0,03 W/(m·K) oder mehr bei den für die Systeme üblichen Betriebsbedingungen. Eine Ausnahme bei den handelsüblichen Isoliersystemen bildet lediglich mit Trichlorfluormethan (R 11) getriebener Polyurethanschaum in Form von geschlossenporigen Platten mit einer Wärmeleitfähigkeit von ca. 0,029 W/(m·K) bei einer Dichte von 30 bis 40 kg/m³ (Ullmanns Encyclopädie der techn. Chemie, 4. Auflage, 1972, Band 2). Die Ursache hierfür bildet die verglichen mit Luft niedrigere Wärmeleitfähigkeit des in den Poren eingeschlossenen R 11. Der Einsatz von fluorierten und/oder chlorierten Kohlenwasserstoffen als Treibmittel oder Treibmittelzusatz ist aus ökologischen Gründen jedoch zumindest umstritten.

Aus der Herstellung von geschäumtem Polystyrol ist auch die Verwendung von Pentan als Treibmittel bekannt, das ebenfalls eine niedrigere Wärmeleitfähigkeit als Luft besitzt. Polystyrol-Schaumstoffe besitzen eine Wärmeleitfähigkeit von ca. 0,031 W/(m·K) bei 0 °C.

Aus EP 0 543 814 B1 bekannt ist ferner ein wärmedämmendes geschäumtes Kunststoffmaterial, das gasgefüllte Zellen, eingeschlossen in einer Kunststoffmatrix, aufweist sowie ein Verfahren zu seiner Herstellung. Das dabei verwendete Treibmittel enthält zumindest eine Mischung aus Krypton und Xenon. Das Verfahren kann sowohl zum Ausschäumen von Hohlräumen als auch zur Herstellung von Formkörpern verwendet werden. Angaben über die Wärmeleitungseigenschaften des wärmedämmenden Materials werden nicht gemacht.

Diesen bekannten Isolierkörpern aus geschäumten Kunststoffen, deren Poren oder Zellen mit schlecht wärmeleitenden Gasen, wie R 11, Pentan, Krypton oder Xenon, während des Herstellungsprozesses gefüllt werden, ist gemeinsam, daß sich ihre Wärmeisolationswirkung durch diffusive Transportvorgänge oder nicht vollständig geschlossene Poren oft innerhalb kurzer Zeit wieder auf Werte verringert, die auch von Schaumstoffkörpern erreicht werden, deren Zellen bzw. Poren mit Luft gefüllt sind.

Damit stellt sich die Aufgabe, geschäumte Kunststoffe als Isolierkörper zur thermischen Isolierung bereitzustellen, die über große Zeiträume deutlich verbesserte Wärmeisolationswirkungen aufweisen und einfach und kostengünstig herzustellen sind.

Diese Aufgabe wird erfindungsgemäß gelöst durch einen Isolierkörper gemäß Patentanspruch 1, der - sozusagen als Kern - den an seiner Oberfläche zumindest teilweise versiegelten, verfestigten und bevorzugt geschlossenporigen Schaum eines Kunststoffes enthält, der in seinen Poren zumindest ein schlecht wärmeleitendes Schwergas oder Schwergasgemisch enthält, so daß der Isolierkörper eine Wärmeleitfähigkeit von weniger als 0,02 W/(m·K) bei ca. 20 °C aufweist.

Durch die zumindest teilweise Versiegelung der Oberfläche des Schaumstoffes wird ein "Ausgasen" des Schwergases und das Eindringen von Luft und damit die Verschlechterung der Isolationswirkung unterbunden.

Die Versiegelung kann beispielsweise derart erfolgen, daß eine (bevorzugt metallisierte) Kunststoffolie auf die Schaumstoffoberfläche aufgezogen wird. Dies kann sowohl direkt im Zuge des Herstellungsprozesses des Schaumstoffkörpers als auch nachträglich geschehen. Bevorzugt werden hierzu flexible Kunststoffolien mit einer Dicke bis zu 0,2 mm verwendet, die - bevorzugt mit Aluminium - mit einer Schichtdicke von bevorzugt ca. 10 µm metallisiert sind. Der Verbund zwischen der Kunststoffolie und der Schaumstoffoberfläche kann kraftschlüssig entweder direkt während des Herstellungsprozesses oder später durch Verkleben oder Verschweißen erreicht werden. Der Isolierkörper kann anstelle mit einer Kunststoffolie auch mit Hilfe einer Glasfolie (Dünnglas, bevorzugt 30 bis 50 µm dick) versiegelt sein.

Die Versiegelung der Schaumstoffoberfläche kann aber auch direkt während des Herstellungsprozesses dadurch erzielt werden, daß der entstehende, hinsichtlich des verwendeten Kunststoffs homogene Kunststoffkörper nur in seinem Inneren verschäumt wird und an seiner Oberfläche jeweils eine unverschäumte Schicht mit einer Dicke bis zu 5 mm, bevorzugt bis zu 1 mm, besitzt, die als Sperrschicht wirkt. Da die Herstellung der erfindungsgemäßen Isolierkörper bevorzugt mittels eines Extrusionsprozesses erfolgt, läßt sich dies durch eine geeignete und dem Fachmann geläufige Wahl der Extrusionsparameter sowie dem Fachmann bekannte Zusatzprozeßschritte einfach realisieren.

Die Versiegelung der Oberflächen kann ferner durch das Lackieren/Bestreichen mit einer Polymerlösung oder -dispersion erfolgen, die anschließend einen geschlossenen, diffusionshemmenden Überzug (Haut) bildet. Geeignete Polymerlösungen bzw. -dispersionen sind z. B. SBR-Latices oder Butyl-Kautschuk. Diese Methode bietet sich insbesondere zum Versiegeln von Schnittflächen und/oder zu Reparatur- bzw. Ausbesserungszwecken an. Grundsätzlich sind alle genannten Versiegelungsmethoden kombinierbar.

Um eine ausreichende Sperrwirkung und damit konstante Isolationswirkung zu erzielen, sind in der Regel zumindest 70 %, bevorzugt mehr als 90 %, der Oberfläche des Isolierkörpers versiegelt. Besonders bevorzugt ist die Oberfläche des Isolierkörpers vollständig versiegelt. Schnittflächen, die entweder während der Herstellung der Isolierkörper oder beim Anpassen (Zuschneiden) an einen zu isolierenden Gegenstand auftreten und nicht oder nicht mehr versiegelt sind, können je nach Größe unversiegelt bleiben oder nachträglich versiegelt werden, z. B. durch Bekleben mit einer metallisierten Kunststoffolie, wobei die Versiegelungen untereinander möglichst gasdicht verbunden werden.

Zum Verschäumen des Kunststoffes werden schlechter als Luft wärmeleitende Gase oder Gasgemische verwendet, deren Wärmeleitfähigkeit bei 20 °C kleiner als ca. 0,018 W/(m·K) ist. Es werden jedoch nur solche Gase/Gasgemische eingesetzt, deren (mittlere) Molmasse gleichzeitig größer als ca. 39 g/mol ist und die daher als Schwergase bezeichnet werden können. Derartige Schwergase besitzen bekanntermaßen im Vergleich zu Stickstoff oder Sauerstoff, also den wesentlichen Bestandteilen von Luft, drastisch verschlechterte Diffusionseigenschaften. Der Einsatz von Schwergasen trägt also bereits wesentlich zum Erhalt der Isolationswirkung über lange Zeiträume bei. Erfindungsgemäß geeignete Schwergase sind also z. B. Kohlendioxid, Schwefelhexafluorid, höhere Kohlenwasserstoffe, Argon, Krypton, Xenon sowie Gemische aus den genannten Gasen, die auch verunreinigt sein können. Möglich, aber nicht bevorzugt, ist die Verwendung chlorierter und/oder fluorierter Kohlenwasserstoffe.

Zusätzlich werden sowohl als zu verschäumender Kunststoff als auch als Folienkunststoff bevorzugt Kunststoffe mit einer Wasserdampfdurchlässigkeit von 0 bis 0,2 g/(m²·d) bei 23 °C und 85 % relativer Luftfeuchte sowie Gasdurchlässigkeiten für N₂, O₂ und CO₂ von in der Summe 0 bis 0,5 cm³/(m²·d·bar) bei 23 °C verwendet, um Diffusionsvorgänge durch die Versiegelungsschicht und auch schon im Schaumstoffkörper selbst möglichst zu unterbinden. Die Gasdurchlässigkeit dieser Kunststoffe ist dann gegenüber Schwergasen wie z. B. Krypton noch deutlich geringer. Bei Verwendung dieser Materialien ist daher ohne deutliche Einbußen hinsichtlich der Isolationswirkung eine Nutzungsdauer des erfindungsgemäßen Isolierkörpers von im allgemeinen etwa 5 bis 10 Jahren, in vielen Fällen auch länger, zu erwarten. Geeignete Kunststoffe sind z. B. Polybutylenterephthalat, Polyethylenterephthalat oder andere Polyester, Polyethylenvinylacetat, Polyamide, Polyimide, Polyvinylchlorid, Polycarbonat, Polyolefine, Polyurethane oder Polymere auf Fluorolefinbasis; insbesondere, wenn sie die genannten Gasdurchlässigkeitseigenschaften besitzen. Zur Versiegelung eingesetzte Glasfolien und metallisierte Kunststoffolien sind nahezu gasundurchlässig.

Die Herstellung der Isolierkörper, insbesondere im Zuge eines Extrusionsprozesses, erlaubt die Fertigung der erfindungsgemäßen Isolierkörper in einer Vielzahl von Formen, Konturen und Abmessungen. Bevorzugt ist die Herstellung solcher Isolierkörper, die eine einfache, großflächige Verarbeitung erlauben, wie z. B. Platten oder (Halb-)Schalen in beliebigen Abmessungen. Das Schwergas bzw. Schwergasgemisch kann dem zu verschäumenden Kunststoff gegebenenfalls zusammen mit anderen Treibmitteln oder Treibmittelzusätzen und gegebenenfalls unter erhöhtem Druck durch Lösen oder Dispergieren beigefügt werden. Um einen möglichst feinporigen Schaum zu erzielen, können gegebenenfalls Nukleierungsmittel wie z. B. Talkum zugesetzt werden.

Die benötigte Gasmenge pro Mengeneinheit des zu verschäumenden Kunststoffs sowie geeignete Verfahrensparameter sind dem Fachmann in Abhängigkeit vom Herstellungsverfahren und vom gewünschten Produkt in aller Regel bereits geläufig oder können in Vorversuchen leicht ermittelt werden.

Die Dichte der erfindungsgemäßen Isolierkörper beträgt zumeist weniger als 200 kg/m³, bevorzugt weniger als 100 kg/m³.

Der erfindungsgemäße Isolierkörper wird bevorzugt zur Wärmeisolierung von Behältern, Rohrleitungen, Apparaten und Bauwerken bzw. Gebäuden eingesetzt. Er bietet die folgenden Vorteile:
- Der erfindungsgemäße Isolierkörper bietet bei vergleichbaren Gebrauchseigenschaften eine um mehr als 30 % verbesserte Wärme-Isolationswirkung bezogen auf die Wärmeleitfähigkeit von 0,03 W/(m·K) von handelsüblichen Isolierkörpern aus geschäumten Kunststoffen.
- Die Nutzungsdauer bei nahezu konstanter Isolationswirkung ist infolge der Versiegelung und der bevorzugt verwendeten Materialien deutlich länger.
- Die Herstellung der erfindungsgemäßen Isolierkörper kann einfach und kostengünstig im großtechnischen Maßstab mit herkömmlichen Verfahren - bevorzugt durch Extrusion - erfolgen.
- Die erfindungsgemäßen Isolierkörper sind vorzugsweise frei von chlorierten und/oder fluorierten Kohlenwasserstoffen.
- Der erfindungsgemäße Isolierkörper kann homogen aus einem Kunststoff hergestellt werden und ist damit sortenrein recyclebar.
- Die erfindungsgemäßen Isolierkörper können in einer Vielzahl von Formen und Abmessungen hergestellt werden.
- Die erfindungsgemäßen Isolierkörper sind leicht zu verarbeiten und können gegebenenfalls auch zugeschnitten werden.
- Infolge der guten Verarbeitungseigenschaften können erfindungsgemäße Isolierkörper sehr gut für großflächige Isolationen verwendet werden.
- Die erfindungsgemäßen Isolierkörper sind nicht feuchteempfindlich.

Die erfindungsgemäßen Isolierkörper werden durch die folgenden Beispiele näher beschrieben, ohne darauf beschränkt zu sein:

### Beispiel 1: Herstellung von erfindungsgemäßen Isolierplatten durch Extrusion

Durch Extrusion von Polybutylenterephthalat aus einem Extruder (D = 90 mm) mit einem Durchsatz von 95 kg/h werden unter Zugabe von Krypton als Treibmittel mit einem Druck von ca. 120 bar in der Aufschmelzzone des Extruders erfindungsgemäße Isolierkörper hergestellt. Die mittlere Verfahrenstemperatur beträgt ca. 250 °C. Der Extrusionsdruck vor dem Breitschlitzwerkzeug liegt bei ca. 50 bar. Die endgültige Formgebung der Isolierkörper erfolgt nach Austritt aus der Düse. Das Extrudat wird zunächst mit einer 0,1 mm dicken Polybutylenterephthalatfolie, die mit einer Schicht aus 10 µm Aluminium metallisiert ist, versiegelt. Es entstehen schließlich Isolierplatten der Abmessungen 2000 mm x 1000 mm x 50 mm dick, deren Schnittkanten nachträglich mit der genannten Folie beklebt werden. Der fertige Isolierkörper verfügt über eine Dichte von 150 kg/m³.

### Beispiel 2: Wärmeleitfähigkeitsbestimmung an einer erfindungsgemäßen Isolierplatte

Ein plattenförmiger erfindungsgemäßer Isolierkörper wird durch Extrusion aus Polybutylenterephthalat mit Krypton als Treibmittel hergestellt. Er ist mit einer 0,1 mm dicken Folie aus Polybutylenterephthalat, die mit einer ca. 10 µm dicken Schicht aus Aluminium metallisiert ist, allseitig versiegelt und besitzt die Abmessungen 300 mm x 300 mm x 30 mm dick. Seine Dichte beträgt ca. 150 kg/m³. Eine Wärmeleitfähigkeitsmessung nach DIN 52 616 liefert einen Wärmeleitfähigkeitswert von 0,018 W/(m·K).

## Patentansprüche

1. Isolierkörper zur thermischen Isolierung, gekennzeichnet durch
- zumindest einen Kern aus einem verfestigten Schaum eines Kunststoffes, der in seinen Poren zumindest ein Schwergas oder Schwergasgemisch enthält,
- eine zumindest teilweise Versiegelung der Oberfläche,
- eine Wärmeleitfähigkeit von weniger als 0,02 W/(m·K) bei 20 °C.

2. Isolierkörper zur thermischen Isolierung nach Anspruch 1, gekennzeichnet durch
- eine Versiegelung von mehr als 70 % der Oberfläche, bevorzugt mehr als 90 %.

3. Isolierkörper zur thermischen Isolierung nach Anspruch 1 oder 2, gekennzeichnet durch die Versiegelung der Oberflächen durch
- eine Kunststoffolie, die bevorzugt metallisiert ist, und zwar bevorzugt mit Aluminium, oder
- eine oberflächennahe, unverschäumte Schicht von bis zu 5 mm Dicke aus dem gleichen Kunststoff, der auch verschäumt wurde, oder
- eine Polymerlösung oder -dispersion, die nach dem Auftragen auf die Schaumstoffoberfläche eine geschlossene Haut bildet, oder
- eine Glasfolie
oder durch eine Kombination der genannten Varianten.

4. Isolierkörper zur thermischen Isolierung nach Anspruch 1, 2 oder 3, gekennzeichnet durch
- eine Wasserdampfdurchlässigkeit des verschäumten Kunststoffs von 0 bis 0,2 g/(m²·d) bei 23 °C und 85 % relativer Luftfeuchte sowie Gasdurchlässigkeiten des verschäumten Kunststoffes für N₂, O₂ und CO₂ von in der Summe 0 bis 0,5 cm³/(m²·d·bar) bei 23 °C.

5. Isolierkörper zur thermischen Isolierung nach einem der Ansprüche 1 bis 4, gekennzeichnet durch
- eine Wasserdampfdurchlässigkeit von 0 bis 0,2 g/(m²·d) bei 23 °C und 85 % relativer Luftfeuchte sowie Gasdurchlässigkeiten für N₂, O₂ und CO₂ von in der Summe 0 bis 0,5 cm³/(m²·d·bar) bei 23 °C des Kunststoffmaterials einer Versiegelungskunststoffolie.

6. Isolierkörper zur thermischen Isolierung nach einem der Ansprüche 1 bis 5,
dadurch gekennzeichnet,
daß der verschäumte Kunststoff ein Polyester, bevorzugt Polybutylenterephthalat oder Polyethylenterephthalat, ein Polyamid, ein Polyimid oder Polyvinylacetat ist.

7. Isolierkörper zur thermischen Isolierung nach einem der Ansprüche 1 bis 6, gekennzeichnet durch
- eine Dichte von weniger als 200 kg/m³, bevorzugt von weniger als 100 kg/m³.

8. Isolierkörper zur thermischen Isolierung nach einem der Ansprüche 1 bis 7,
dadurch gekennzeichnet,
daß die Schaumporen gegebenenfalls gemeinsam mit weiteren Treibmitteln Kohlendioxid, Schwefelhexafluorid, höhere Kohlenwasserstoffe, Argon, Krypton, Xenon oder Gemische aus diesen Gasen (rein oder verunreinigt) enthalten.

9. Verwendung des Isolierkörpers nach Anspruch 1 zur thermischen Isolierung von Apparaten, Rohrleitungen, Behältern und Bauwerken bzw. Gebäuden.

10. Verfahren zur Herstellung von Isolierkörpern zur thermischen Isolierung gemäß Anspruch 1, gekennzeichnet durch einen Extrusionsprozeß.
